(19) Europäisches Patentamt
European Patent Office
Office européen des brevets

(11) **EP 3 196 605 B1**

(12) **EUROPÄISCHE PATENTSCHRIFT**

(45) Veröffentlichungstag und Bekanntmachung des Hinweises auf die Patenterteilung:
**27.01.2021 Patentblatt 2021/04**

(51) Int Cl.:
***G01F 1/84*** *(2006.01)*

(21) Anmeldenummer: **16204316.0**

(22) Anmeldetag: **15.12.2016**

(54) **VERFAHREN ZUM BETREIBEN EINES CORIOLIS-MASSEDURCHFLUSSMESSGERÄTS UND CORIOLIS-MASSEDURCHFLUSSMESSGERÄT**

METHOD FOR OPERATING A CORIOLIS MASS FLOW METER AND CORIOLIS MASS FLOW METER

PROCÉDÉ D'OPÉRATION D'UN DÉBITMÈTRE MASSIQUE DU TYPE CORIOLIS ET DÉBITMÈTRE MASSIQUE DU TYPE CORIOLIS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **20.01.2016 DE 102016100952**

(43) Veröffentlichungstag der Anmeldung:
**26.07.2017 Patentblatt 2017/30**

(73) Patentinhaber: **Krohne Messtechnik GmbH 47058 Duisburg (DE)**

(72) Erfinder: **Kunze, Johannes 44892 Bochum (DE)**

(74) Vertreter: **Gesthuysen Patentanwälte Patentanwälte Huyssenallee 100 45128 Essen (DE)**

(56) Entgegenhaltungen:
**DE-A1-102006 031 198  DE-A1-102008 059 920 DE-A1-102012 011 932**

EP 3 196 605 B1

**Beschreibung**

Die Erfindung betrifft ein Verfahren zum Betreiben eines Coriolis-Massedurchflussmessgeräts mit wenigstens einem Regler, wenigstens einer elektrischen Stelleinrichtung, wenigstens einem elektromagnetischen Antrieb mit einer Antriebspule als Schwingungserzeuger, wenigstens einem Messrohr, und wenigstens einem Schwingungsaufnehmer, wobei der Regler ein Reglerausgangssignal zur Ansteuerung der elektrischen Stelleinrichtung erzeugt, die elektrische Stelleinrichtung ein elektrisches Anregungssignal zur Anregung des elektromagnetischen Antriebs bereitstellt, der elektromagnetische Antrieb das Messrohr zur Schwingung in wenigstens einer Eigenform anregt und wobei die angeregte Schwingung des Messrohrs von dem Schwingungsaufnehmer erfasst und als wenigstens ein Ausgangssignal ausgegeben wird, wobei die elektrische Stelleinrichtung die Antriebspule des elektromagnetischen Antriebs so mit einer Antriebspannung und einem Antriebstrom beaufschlagt, dass die Schwingung des Messrohrs weitestgehend in Resonanz erfolgt. Die Erfindung betrifft ferner ein Coriolis-Massedurchflussmessgerät, das ein derartiges Verfahren im Betrieb ausführt.

Die vorgenannten Verfahren zum Betreiben von Coriolis-Massedurchflussmessgeräten und entsprechende Coriolis-Massedurchflussmessgeräte sind seit vielen Jahren bekannt, beispielsweise aus der DE 10 2012 011 932 A1, DE 10 2006 031 198 A1 und DE 10 2008 059920 A1. Sie gehören insgesamt zur Klasse der Resonanzmesssysteme, zu denen auch Dichtemessgeräte oder Füllstandwächter nach dem Stimmgabel-Prinzip, Quarzwaagen und Bandviskosimeter gehören. Diese Resonanzmesssysteme stehen mit einem Prozess in Verbindung, wobei sich Prozess- und Resonanzmesssystem wechselseitig beeinflussen. Bei derartigen Systemen sind Informationen über die zu bestimmende Prozessgröße (Messgröße) in den Eigenfrequenzen verschlüsselt. Üblicherweise werden bei derartigen Systemen die Arbeitspunkte auf die Eigenfrequenzen des Messsystems gelegt. Bei Coriolis-Massedurchflussmessgeräten entspricht das Messrohr dem Schwingelement des Resonanzmesssystems.

Als Coriolis-Massedurchflussmessgeräte ausgebildete Resonanzmesssysteme werden vor allem in der industriellen Prozessmesstechnik dort eingesetzt, wo mit hoher Genauigkeit Masseströme bestimmt werden müssen. Die Funktionsweise von Coriolis-Massedurchflussmessgeräten beruht darauf, dass wenigstens ein von einem Medium durchströmtes Messrohr - das Schwingelement - von einem Schwingungserzeuger zu einer Schwingung angeregt wird, wobei dieser Schwingungserzeuger voraussetzungsgemäß ein elektromagnetischer Antrieb mit einer Antriebspule ist. Die Spule wird üblicherweise von einem elektrischen Strom durchflossen, wobei mit dem Spulenstrom unmittelbar eine Kraftwirkung auf das Schwingelement, also das Messrohr, verbunden ist; die Kraftwirkung wird meist erzielt und vermittelt durch einen in der Antriebspule beweglich gelagerten Permanentmagneten.

Bei Coriolis-Massedurchflussmessgeräten beruht die Funktionsweise darauf, dass das massebehaftete Medium aufgrund der durch zwei orthogonale Bewegungen - die der Strömung und die des Messrohres - hervorgerufene Coriolis-Trägheitskraft auf die Wandung des Messrohres wirkt. Diese Rückwirkung des Mediums auf das Messrohr führt zu einer Änderung der Messrohrschwingung im Vergleich zu dem undurchströmten Schwingungszustand des Messrohres. Durch Erfassung dieser Besonderheiten der Schwingungen des durchströmten Coriolis-Messrohrs kann der Massedurchfluss durch das Messrohr mit hoher Genauigkeit bestimmt werden.

Von besonderer Bedeutung sind die Eigenfrequenzen des Coriolis-Massedurchflussmessgeräts, im Wesentlichen die Eigenfrequenzen des Messrohrs als Schwingelement, weil die Arbeitspunkte des Coriolis-Massedurchflussmessgeräts üblicherweise auf Eigenfrequenzen des Messrohrs gelegt werden, um die erforderliche Schwingung für die Induktion der Corioliskräfte mit einem minimalen Energieaufwand einprägen zu können. Dies ist damit gemeint, wenn davon die Rede ist, dass die Schwingung des Messrohres weitestgehend in Resonanz erfolgt. Die dann von dem Messrohr ausgeführten Schwingungen weisen eine bestimmte Form auf, die als Eigenform der jeweiligen Anregung bezeichnet wird.

Aus dem Stand der Technik ist bekannt, dass zur Anregung des Schwingelements von dem Regler ein harmonisches Basissignal als Reglerausgangssignal in Form einer sinusförmigen Spannung erzeugt wird und diese sinusförmige Spannung die elektrische Stelleinrichtung - und damit die Antriebspule - ansteuert, wobei die elektrische Stelleinrichtung die Aufgabe hat, an ihrem Ausgang eine entsprechende Leistung zu Verfügung zu stellen, um den elektromagnetischen Antrieb in geeigneter Weise und mit ausreichender Leistung ansteuern zu können. Die elektrische Stelleinrichtung ist damit praktisch das leistungsmäßige Bindeglied zwischen dem Regler und dem elektromagnetischen Antrieb des Coriolis-Massedurchflussmessgeräts.

Der Regler dient dazu, das Messrohr als Schwingelement in Resonanz zu betreiben, wozu ermittelt werden muss, ob Eingangs- und Ausgangsgröße des Coriolis-Massedurchflussmessgeräts beziehungsweise des Messrohres die der Resonanz entsprechende Phasendifferenz aufweisen. Bei dem Coriolis-Massedurchflussmessgerät ist dies eingangsseitig die Kraft, mit der das Messrohr als Schwingelement angeregt wird, und ist dies ausgangsseitig die Geschwindigkeit des Messrohres, also die zeitliche Änderung der Auslenkung des Messrohrs. Aufgrund der diesem schwingfähigen System zugrundeliegenden Zusammenhänge liegt Resonanz in einer Eigenform der Bewegung dann vor, wenn eingangsseitig die Kraftwirkung und die ausgangsseitige Messrohrgeschwindigkeit eine Phasendifferenz von 0° aufweisen. Ist diese Phasenbedingung erfüllt, liegt die gewünschte Resonanz vor. Aus diesem Grund ist der Regler in einem Regelkreis angeordnet, der insgesamt - jedenfalls auch - als ein Phasenregelkreis ausgestaltet ist.

Coriolis-Massedurchflussmessgeräte weisen im Stand der Technik als elektrische Stelleinrichtungen häufig entweder eine Einrichtung zur Spannungsaufprägung oder eine Vorrichtung zur Stromeinprägung in den elektromagnetischen Antrieb mit einer Antriebspule auf. Die Stromeiprägung in den eine Spule aufweisenden elektromagnetischen Antrieb führt zwangsläufig zu hohen und verrauschten Spannungen an der Antriebspule, da die Sprünge im Reglerausgangssignal - und seien diese auch nur durch die Quantisierungsstufen eines Digital/Analog-Wandlers bedingt - als Sprünge im Strom durch den elektromagnetischen Antrieb auftreten und dort durch die Antriebspule differenziert werden; das gilt insbesondere für Stelleinrichtungen mit einer hohen slew rate, also mit hoher Anstiegsgeschwindigkeit des Stromes. Dies ist problematisch hinsichtlich der elektromagnetischen Verträglichkeit und führt auch zu einer Verringerung des Signal-Rausch-Abstandes und damit zu einer Vergrößerung der Messunsicherheit bei der Messung verschiedener Prozessgrößen und bei der Bestimmung verschiedener Parameter des Resonanzmesssystems, im Falle des hier vorliegenden Coriolis-Massedurchflussmessgeräts also beispielsweise die Steifigkeit des Messrohrs. Einige der bekannten Verfahren benötigen zur Implementierung der Phasenregler genaue Kenntnis der Parameter der Antriebspule, also beispielsweise des ohmschen Widerstandes $R_S$ und der Induktivität der Spule $L_S$.

Aufgabe der vorliegenden Erfindung ist es, ein Verfahren zum Betreiben eines Coriolis-Massedurchflussmessgeräts zur Verfügung zu stellen, das ein einfaches, schnelles und zuverlässiges Anfahren, Halten und Nachführen einer Resonanzstelle als Arbeitspunkt des Coriolis-Massedurchflussmessgeräts ermöglicht.

Das erfindungsgemäße Verfahren zum Betreiben eines Coriolis-Massedurchflussmessgeräts, bei dem die zuvor hergeleitete und aufgezeigte Aufgabe gelöst ist, ist durch die Merkmale des unabhängigen Anspruchs 1 definiert.

Das Verfahren umfasst, dass zur Erzielung des Resonanzbetriebs das Ausgangssignal des Schwingungsaufnehmers ermittelt wird, die Antriebspannung an der Antriebspule ermittelt wird, die Phasenlage des Antriebstroms gegenüber der Phasenlage des Ausgangssignal des Schwingungsaufnehmers ermittelt wird und aus den ermittelten Größen eine neue Sollphasenlage für die Antriebspannung ermittelt und dem Regler zugeleitet wird so, dass der Regler über die elektrische Stelleinrichtung eine Antriebspannung mit der ermittelten neuen Sollphasenlage erzeugt.

Das vorgeschlagene Verfahren ist ausgesprochen vorteilhaft, weil es auf messtechnisch sehr einfach ermittelbare Größen zurückgreift, wie beispielsweise das Ausgangssignal des Schwingungsaufnehmers - was als bekannt vorausgesetzt werden kann, da dieses Signal ja ohnehin zur Bestimmung des Massedurchflusses benötigt wird - oder auch die Antriebspannung an der Antriebspule, die per se bekannt ist, weil sie durch das Reglerausgangssignal erzeugt wird - darüber hinaus kann sie aber auch messtechnisch sehr einfach erfasst werden -. Der Antriebstrom durch die Antriebspule ist ebenfalls leicht ermittelbar, beispielsweise durch einen sehr kleinen Messwiderstand, wobei die an ihm abfallende Spannung als Messsignal abgegriffen wird.

Das Übertragungsverhalten des Coriolis-Massedurchflussmessgeräts wird - wie bei allen physikalischen Systemen - im regelungstechnischen Sinne durch das Verhältnis von der Ausgangsgröße und der die Ausgangsgröße verursachenden Eingangsgröße beschrieben. Im Falle des Coriolis-Massedurchflussmessgeräts ist dies zum einen die Kraftwirkung des elektromagnetischen Antriebs auf das Messrohr und zum anderen die Auslenkgeschwindigkeit des Messrohres an den Messstellen. In Resonanz besteht kein Phasenunterschied zwischen dem Verlauf der Kraftbeaufschlagung und der Geschwindigkeit des Messrohres, also der ersten zeitlichen Ableitung der Messrohrauslenkung.

Bei einem elektromagnetischen Antrieb mit einer Antriebspule verhält sich die ausgeübte Kraft proportional zu dem Strom durch die Antriebspule, was der Grund ist für die Erfassung des Antriebstromes $i_{dr}$ durch die Antriebspule. Die Erfassung der Auslenkung des Messrohres wird üblicherweise durch Schwingungsaufnehmer realisiert, die mit einer Messspule und einem darin bewegten Permanentmagneten arbeiten, der von dem Messrohr ausgelenkt wird und in der Messspule eine Spannung induziert. Die Messrohrgeschwindigkeit, also die erste Ableitung der Messrohrauslenkung, verhält sich proportional zu der induzierten Spannung in einem solchen Schwingungsaufnehmer. Insoweit ist verständlich, weshalb es sinnvoll ist, auch das Ausgangssignal $u_s$ des Schwingungsaufnehmers zu erfassen.

Liegen diese Größen vor, ist es ohne weiteres möglich, auch die Phasenlage $\varphi_{idr}$ des Antriebstromes $i_{dr}$ gegenüber der Phasenlage $\varphi_s$ des Ausgangsignals $u_s$ des Schwingungsaufnehmers zu ermitteln. Ist diese Phasenlage bekannt, ist auch die eigentlich interessierende Phasenlage zwischen der anregenden Kraft F auf das Messrohr und der Reaktionsgröße der Messrohrgeschwindigkeit bekannt. Diese relative Phasenlage beziehungsweise die Phasendifferenz zwischen diesen Größen gilt es für den Resonanzfall zu Null zu regeln.

Das erfindungsngsgemäße Verfahren sieht vor, dass eine Sollvorgabe für die Antriebspannung und damit auch eine Sollphasenlage der Antriebspannung unter Definition einer Nullphasenlage des Ausgangssignals des Schwingungsaufnehmers ermittelt wird. Die wesentliche Information für die Regelung ist der Phasenunterschied zwischen dem Ausgangssignal des Schwingungsaufnehmers und der Phasenlage des Antriebstromes und weniger die absolute Größe der Antriebspannung oder die absolute Größe des Antriebstromes. Wenn es also gelingt, eine Sollvorgabe für die von dem Regler beeinflussbare und bestimmbare Antriebspannung zu berechnen, also eine vollständige Sollvorgabe mit Betrag und Phase, um die Messrohrschwingung in Resonanz durchzuführen, dann wird damit automatisch auch eine solche Sollphasenlage der Antriebspannung ermittelt, um Resonanz zu erzeugen.

Für die Bestimmung einer Phasendifferenz beziehungsweise für eine Angabe der Sollphasenlage ist es vereinfachend, wenn für das Ausgangssignal des Schwingungsaufnehmers per Definition eine Nullphasenlage vorgegeben wird, die Phase des Ausgangssignals also automatisch zu Null gesetzt wird, also alle anderen Schwingungsgrößen auf die Phasenlage des Ausgangssignals bezogen werden.

Das erfindungsngsgemäße Verfahren zum Betreiben eines Coriolis-Massedurchflussmessgeräts sieht weiter vor, dass die Sollvorgabe $\underline{u}_{dr,soll}$ für die Antriebspannung $\underline{u}_{dr}$ über folgenden gleichungsmäßigen Zusammenhang ermittelt wird:

$$\underline{u}_{dr,soll} = e^{-j\varphi_{idr}}\left(\underline{u}_{dr} - k_B \cdot u_s\right) + k_B \cdot u_s.$$

Hierzu ist auszuführen, dass es sich bei $k_B$ um den Gegeninduktionsfaktor handelt, der eine rein reelle Zahl ist. Es ist hier durchaus beabsichtigt, dass es sich bei dem Ausgangssignal $u_s$ des Schwingungsaufnehmers um eine reale, also nicht unterstrichene Größe handelt, da sich alle anderen Größen auf die auf Null definierte Phasenlage des Ausgangsignals $u_s$ beziehen. Bei der Sollphasenlage $\underline{u}_{dr,soll}$ und bei dem elektrischen Anregungssignal $\underline{u}_{dr}$ des elektromagnetischen Antriebs handelt es sich - im allgemeinen Fall - um phasenverschobene Größen, die also eine Phasenverschiebung zu dem Ausgangsignal $u_s$ des Schwingungsaufnehmers aufweisen, weshalb sie hier auch allgemein unterstrichen dargestellt sind. Dieser Zusammenhang wird noch im Rahmen der Figurenbeschreibung erörtert werden.

Es hat sich als vorteilhaft herausgestellt, dass die Impedanz $\underline{Z}_S$ der Antriebspule außerhalb des Resonanzbetriebs ermittelt wird, indem der Quotient aus der Antriebspannung $\underline{u}_{dr}$ und dem sich einstellenden Antriebstrom $\underline{i}_{dr}$ berechnet wird und der Gegeninduktionsfaktor $k_B$ ermittelt wird unter Vernachlässigung der Gegeninduktionsspannung $u_B$ an der Antriebspule, wobei hier auf die Maschengleichung der Netzwerkmasche zurückgegriffen wird. Diese besteht aus dem Ausgang der elektrischen Stelleinrichtung und dem daran angeschlossenen elektromagnetischen Antrieb mit der Antriebspule. Wenn die Impedanz $\underline{Z}_S$ der Antriebspule derart bestimmt worden ist, ist es besonders einfach, wenn zur Ermittlung des Gegeninduktionsfaktors $k_B$ folgender Zusammenhang mit der Impedanz $\underline{Z}_S$ der Antriebspule, dem Antriebstrom $\underline{i}_{dr}$ und dem Ausgangsignal $\underline{u}_s$ des Schwingungsaufnehmers herangezogen wird:

$$k_B = \frac{\underline{u}_{dr} - \underline{Z}_S \cdot \underline{i}_{dr}}{\underline{u}_S}.$$

Es ist selbstverständlich, dass die Bestimmung der Sollvorgabe $\underline{u}_{dr,soll}$ für die Antriebspannung $u_{dr}$ fortwährend geschieht, wie dies für ein normales Abtastsystem mit einem Regler üblich ist. So kann sichergestellt werden, dass auch bei Veränderungen von bestimmten Gegebenheiten im Betrieb des Coriolis-Massedurchflussmessgeräts stets reagiert werden kann und ein veränderter Resonanzpunkt nachgeführt wird.

Es mag jedoch auch vorteilhaft sein, dass der Regelbetrieb in Resonanz zeitweise unterbrochen wird, dem Regler eine andere Phasenvorgabe für die Phasenlage $\varphi_{idr}$ des Antriebstroms $\underline{i}_{dr}$ gegenüber der Phasenlage $\varphi_s$ des Ausgangsignals $\underline{u}_s$ des Schwingungsaufnehmers vorgegeben wird. Derartige vom Normal-Arbeitsbetrieb abweichende Einstellungen können beispielsweise zur Systemidentifikation genutzt werden, beispielsweise um phasenselektiv Parameter zu bestimmen, z. B. Parameter von mathematischen Modellen des Coriolis-Massedurchflussmessgeräts, die zur Regelung herangezogen werden. Die erfindungsgemäße Aufgabe wird ferner gelöst durch ein Coriolis-Massedurchflussmessgerät, dass das oben beschriebene Verfahren in seinen vielfältigen Ausgestaltungen durchführt, wie im unabhängigen Anspruch 5 und dem davon abhängigen Anspruch 6 definiert.

Im Einzelnen gibt es nun verschiedene Möglichkeiten, das erfindungsgemäße Verfahren zum Betreiben eines Coriolis-Massedurchflussmessgeräts und das erfindungsgemäße Coriolis-Massedurchflussmessgerät auszugestalten und weiterzubilden. Dazu wird verwiesen auf die den Patentansprüchen 1 und 5 nachgeordneten Patentansprüche und auf die Beschreibung bevorzugter Ausführungsbeispiele in Verbindung mit der Zeichnung. In der Zeichnung zeigen

Fid. 1    schematisch die Struktur eines Coriolis-Massedurchflussmessgeräts, wie es aus dem Stand der Technik bekannt ist, wie es aber auch für das erfindungsgemäße Verfahren und das erfindungsgemäße Coriolis-Massedurchflussmessgerät Verwendung finden könnte,

Fig. 2    das Ersatzschaltbild einer in einem elektronischen Antrieb enthaltenen Spule mit elektrischer Stelleinrichtung und

Fig. 3    das erfindungsgemäße Verfahren zum Betrieb eines Resonanzmesssystems in Blockschaltbilddarstellung.

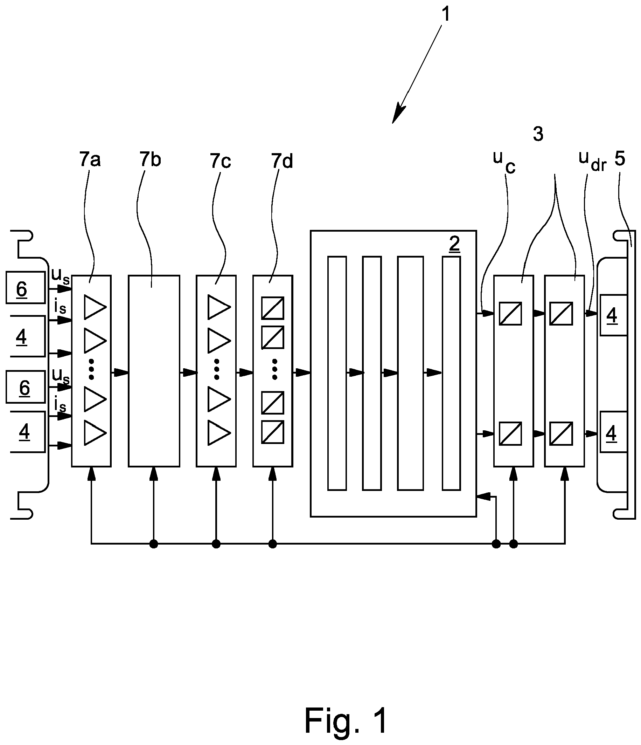

Figur 1 zeigt ein Coriolis-Massedurchflussmessgerät 1 mit einem in einem digitalen Signalprozessor implementierten Regler 2, mit einer elektrischen Stelleinrichtung 3 und mit einem elektromagnetischen Antrieb 4 mit einer in Figur 1 im Detail nicht dargestellten Antriebspule als Schwingungserzeuger.

Das Coriolis-Massedurchflussmessgerät 1 weist ein Messrohr 5 auf. Der elektromagnetische Antrieb 4 hat die Aufgabe, das mit einem Medium durchströmbare Messrohr 5 zu einer Schwingung in einer Eigenform anzuregen. Je nach Art der Eigenform ist dazu lediglich ein einziger elektromagnetischer Antrieb 4 erforderlich, sollen noch höhere Moden angeregt werden können, sind auch zwei oder mehr elektromagnetische Antriebe 4 erforderlich.

In Figur 1 ist das Coriolis-Massedurchflussmessgerät 1 zweigeteilt dargestellt. Das eine Einheit bildende Coriolis-Massedurchflussmessgerät 1 endet zu einer Hälfte am rechten Bildrand der Figur und beginnt aus Gründen der übersichtlichen Darstellung mit der anderen Hälfte wieder am linken Bildrand der Figur. Dort ist zu erkennen, dass das Coriolis-Massedurchflussmessgerät 1 ferner auch Schwingungsaufnehmer 6 aufweist, die jeweils ein Ausgangsignal $\underline{u}_s$ ausgeben, vorliegend in Form eines Geschwindigkeitssignals, das über die Geschwindigkeit v der Messrohrbewegung Auskunft gibt. Die elektrischen Zustandsgrößen werden hier unterstrichen dargestellt, um zu verdeutlichen, dass es sich üblicherweise um harmonische Signale mit einer Phasenlage handelt, also als Zeigergrößen beschreibbar sind. Dadurch ist es möglich, bei nicht unterstrichen dargestellten elektrischen Zustandsgrößen darauf zu schließen, dass sie - aus welchem Grund auch immer - die Phasenlage Null haben, mathematisch also reelwertig sind.

Der Regler 2 erzeugt ein Reglerausgangssignal $\underline{u}_c$ zur Ansteuerung der elektrischen Stelleinrichtung 3, und die elektrische Stelleinrichtung 3 erzeugt nachfolgend ein elektrisches Anregungssignal $\underline{u}_{dr}$ zur Anregung des elektromagnetischen Antriebs 4. An die Schwingungsaufnehmer 6 schließt sich eine Mehrzahl von Übertragungselementen 7 an, die im Wesentlichen der Signalaufbereitung dienen, wie beispielsweise eine aus Verstärkern bestehende Anpassungselektronik 7a, ein Hardwaremultiplexer 7b zur Realisierung verschiedener umschaltbarer Messkanäle, eine weitere Anpassungselektronik 7c und ein Analog/Digital-Wandler 7d, der die analogen gemessenen Signale dem Regler 2 in Form digitaler Signale wieder zuführt. Auf die genaue Ausführung dieser Übertragungselemente kommt es im Fall der vorliegenden Erfindung nicht an, sie sind hier lediglich der Vollständigkeit halber beschrieben.

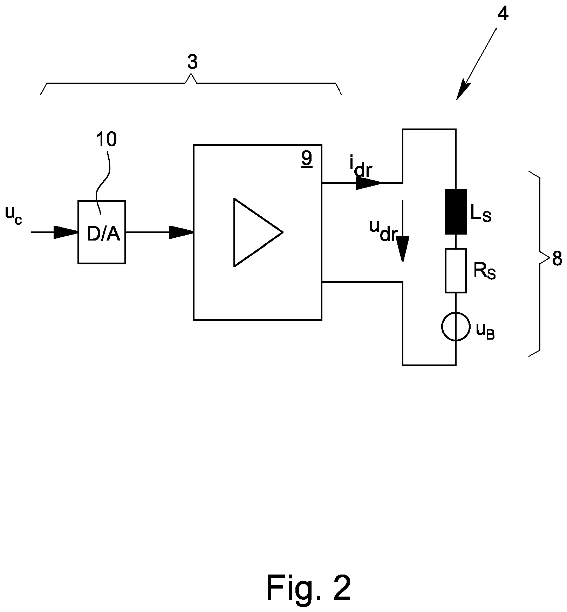

Im Stand der Technik bildet der so implementierte Regelkreis einen PhasenRegelkreis und beruht entweder auf der Einprägung eines Stromes $\underline{i}_{dr}$ in eine Spule 8 des elektromagnetischen Antriebs 4 oder auf der Aufschaltung eines elektrischen Anregungssignals in Form einer Anregungsspannung $\underline{u}_{dr}$ an die Klemmen einer Spule 8 des elektromagnetischen Antriebs 4. Dieses Konzept ist zur Verdeutlichung in Figur 2 dargestellt. Der elektromagnetische Antrieb 4 weist hier eine Antriebspule 8 auf, die im Ersatzschaltbild gemäß Figur 2 eine Spuleninduktivität $L_s$, einen ohmschen Spulenwiderstand $R_s$ und eine geschwindigkeitsproportionale induzierte Spannungsquelle $\underline{u}_B$ aufweist. Der in Figur 2 nicht dargestellte Regler liefert das Reglerausgangssignal $\underline{u}_c$ zur Ansteuerung der weiteren elektrischen Stelleinrichtung 3, bestehend aus einer steuerbaren Energiequelle 9 und einem D/A-Wandler. Die steuerbare Energiequelle 9 ist entweder eine spannungsgesteuerte Stromquelle oder aber auch eine spannungsgesteuerte Spannungsquelle, wobei beide Lösungen unterschiedliche Vor- und Nachteile aufweisen, die mit den besonderen Eigenschaften der Spule 8 zusammenhängen, beispielsweise dass sprunghafte Stromveränderungen zu sich stark ändernden Klemmenspannungen führen.

Bei dem elektromagnetischen Antrieb 4, der, wie in Figur 2 dargestellt, eine Spule 8 aufweist, ist der Spulenstrom $\underline{i}_{dr}$ von besonderer Bedeutung, weil der Spulenstrom $i_{dr}$ diejenige Zustandsgröße des elektromagnetischen Antriebs 4 ist, die proportional der Kraftwirkung des elektromagnetischen Antriebs 4 auf das Messrohr 5 ist. Im Fall des Coriolis-Massedurchflussmessgeräts 1 ist im Resonanzfall die Phasendifferenz zwischen der auf das Schwingelement 5 wirkenden Kraft F und damit auch zwischen dem Spulenstrom $\underline{i}_{dr}$ und der erfassten Geschwindigkeit v der Messrohrbewegung gleich Null. Die Geschwindigkeit v der Messrohrbewegung entspricht dabei beziehungsweise ist proportional zur erfassten Ausgangsspannung $\underline{u}_s$ der Schwingungsaufnehmer 6. Die Bewegung des Messrohrs 5 hat jedoch nicht nur Einfluss auf die Schwingungsaufnehmer 6, vielmehr ist auch eine Rückwirkung auf die Schwingungserzeuger in Form der Antriebspule 8 gegeben, da die Bewegung des Messrohres 5 zu einer entsprechenden Bewegung eines üblicherweise vorhandenen Permanentmagneten in der Antriebspule 8 führt, die ihrerseits die Gegeninduktionsspannung $\underline{u}_B$ erzeugt.

In der aus den Ausgangsklemmen der Stelleinrichtung 3 und den daran angeschlossenen Klemmen der Spule 8 gebildeten Masche gilt folglich

$$\underline{u}_{dr} = \underline{Z}_S \cdot \underline{i}_{dr} + \underline{u}_B \qquad (1)$$

Die Herausforderung beim Betrieb eines Coriolis-Massedurchflussmessgeräts 1 besteht darin, die elektrische Stelleinrichtung 3 über den Regler 2 so anzusteuern, dass die Antriebspule 8 des elektromagnetischen Antriebs 4 derart mit einer Antriebspannung $\underline{u}_{dr}$ und einem Antriebstrom $\underline{i}_{dr}$ beaufschlagt wird, dass die Schwingung des Messrohrs 5 weitestgehend in Resonanz erfolgt. "Weitestgehend in Resonanz" berücksichtigt dabei, dass der Resonanzpunkt ein streng definierter exakter Zustand des Systems ist, der im mathematischen Sinne in der Praxis nie ganz exakt getroffen wird, sondern immer nur so exakt, wie es die technische Lösung und die realisierte Regelung tatsächlich zulässt, es ist also einfach der Resonanzbetrieb in der Genauigkeit gemeint, die die realisierte technische Lösung zulässt.

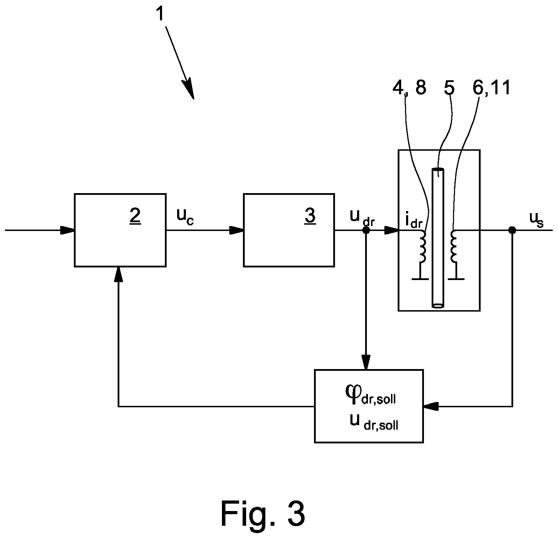

In Figur 3 ist nun das erfindungsgemäße Verfahren zum Betreiben des Coriolis-Massedurchflussmessgeräts 1 dargestellt, nämlich dargestellt in Form eines Blockschaltbildes. Der Regler 2 steuert über das Reglerausgangssignal $\underline{u}_c$ die elektrische Stellenrichtung 3 an, wobei die elektrische Stelleinrichtung 3 durch Ausgabe des elektrischen Anre-

gungssignals $\underline{u}_{dr}$ den elektromagnetischen Antrieb 4 ansteuert, der seinerseits als Schwingungserzeuger das Messrohr 5 auslenkt. Der elektromagnetische Antrieb 4 besteht aus einer schematisch dargestellten Spule 8 mit einem Dauermagneten als Kern, wobei der nicht dargestellte Dauermagnet bei Bestromung der Spule 8 eine Bewegung ausführt und so das Messrohr 5 zu einer Schwingung anregen kann. Die Schwingung des Messrohrs 5 wird von dem Schwingungsaufnehmer 6 erfasst, der im vorliegenden Fall ebenfalls einen Permanentmagneten und eine Spule 11 aufweist, wobei zur Auswertung der Lageänderung des Messrohrs 5 die in der Spule 11 induzierte Spannung $\underline{u}_s$ herangezogen wird. Das Geschwindigkeitssignal liegt also als Ausgangsignal $\underline{u}_s$ des Schwingungsaufnehmers 6 vor.

Erfindungsgemäß ist nun zur Erzielung des Resonanzbetriebs vorgesehen, das Ausgangsignal $\underline{u}_s$ des Schwingungsaufnehmers zu ermitteln, die Antriebspannung $\underline{u}_{dr}$ an der Antriebspule 8 zu ermitteln, die Phasenlage $\varphi_{idr}$ des Antriebstroms $\underline{i}_{dr}$ gegenüber der Phasenlage $\varphi_s$ des Ausgangsignals $\underline{u}_s$ des Schwingungsaufnehmers 6 zu ermitteln und aus den ermittelten Größen eine neue Sollphasenlage $\varphi_{idr,soll}$ für die Antriebspannung $\underline{u}_{dr}$ zu ermitteln und dem Regler 2 zuzuleiten, sodass der Regler 2 über die elektrische Stelleinrichtung 3 eine Antriebspannung $\underline{u}_{dr}$ mit der ermittelten neuen Sollphasenlage $\varphi_{dr,soll}$ erzeugt.

Dem Verfahren liegt die Überlegung zugrunde, dass die Phasendifferenz zwischen der Kraftwirkung F auf das Messrohr und der resultierenden Messrohrgeschwindigkeit v nach Möglichkeit zu Null zu regeln ist, wobei diese Phasendifferenz auch der Phasendifferenz zwischen dem Spulenstrom $\underline{i}_{dr}$ und der Messrohrgeschwindigkeit v beziehungsweise der induzierten Gegenspannung $\underline{u}_B$ entspricht. Dies entspricht gleichzeitig auch der Phasendifferenz zwischen dem Spulenstrom $\underline{i}_{dr}$ und der Phasenlage des Ausgangsignals $\underline{u}_s$ des Schwingungsaufnehmers 6, also:

$$\Delta\varphi\left(\underline{F},\underline{v}\right) = \Delta\varphi\left(\underline{i}_{dr},\underline{u}_B\right) = \Delta\varphi\left(\underline{i}_{dr},\underline{u}_s\right) = 0. \qquad (2)$$

Das elektrische Anregungssignal $\underline{u}_{dr}$ zur Anregung des elektromagnetischen Antriebs muss also so gewählt werden, dass die vorgenannte Resonanzbedingung erfüllt ist. Dabei gilt, dass die Gegeninduktionsspannung $u_B$ in Phase mit der Ausgangspannung $\underline{u}_s$ des Schwingungsaufnehmers 6 ist, es gilt demnach:

$$\underline{u}_B = k_B \cdot \underline{u}_s. \qquad (3)$$

Unter dieser Maßgabe lässt sich die Maschengleichung 1 auch schreiben als:

$$\underline{u}_{dr} = \underline{Z}_S \cdot \underline{i}_{dr} + k_B \cdot \underline{u}_s \qquad (4)$$

Die Notation und Berechnung wird besonders einfach, wenn die Phasenlage des Ausgangsignals $\underline{u}_s$ Nullphasenlage definiert wird, also $\varphi_s = 0$. Unter dieser Maßgabe lässt sich demnach vereinfachend Gleichung 4 auch folgendermaßen schreiben:

$$\underline{u}_{dr} = \underline{Z}_S \cdot \left|\underline{i}_{dr}\right| e^{-j\varphi_{idr}} + k_B \cdot u_s \qquad (5)$$

Da unter dieser Voraussetzung also im Resonanzfall gilt, dass die Phasenlage $\varphi_{idr}$ des Antriebstroms $\underline{i}_{dr}$ gleich Null ist, gilt bei richtig gewählter Vorgabe einer Sollvorgabe $\underline{u}_{dr,soll}$ für die Antriebspannung $\underline{u}_{dr}$ also:

$$\underline{u}_{dr,soll} = \underline{Z}_S \cdot \left|\underline{i}_{dr}\right| + k_B \cdot u_s \qquad (6)$$

Für den Antriebstrom $\underline{i}_{dr}$ gilt damit nach Auflösung der zuvor eingeführten Maschengleichung im Ist- und im Sollzustand:

$$\underline{i}_{dr} = \left|\underline{i}_{dr}\right| e^{-j\varphi_{idr}} = \frac{\left(\underline{u}_{dr} - k_B \cdot u_s\right)}{\underline{Z}_S} \qquad (7)$$

$$\underline{i}_{dr} = \left|\underline{i}_{dr}\right| \quad = \frac{\left(\underline{u}_{dr,soll} - k_B \cdot u_s\right)}{\underline{Z}_S}$$

Werden der Ist- und der Sollzustand gleichungsmäßig ins Verhältnis gesetzt, folgt:

$$\frac{|\underline{i}_{dr}|e^{-j\varphi_{idr}}}{|\underline{i}_{dr}|} = \frac{\underline{u}_{dr}-k_B\cdot u_s}{\underline{u}_{dr,soll}-k_B\cdot u_s} \qquad (8)$$

Damit gilt für die Sollvorgabe $u_{dr,soll}$ für die Antriebspannung $u_{dr}$:

$$\underline{u}_{dr,soll} = e^{-j\varphi_{idr}}\left(\underline{u}_{dr} - k_B \cdot u_s\right) + k_B \cdot u_s \qquad (9)$$

Es bietet sich also an, die Sollvorgabe $\underline{u}_{dr,soll}$ für die Antriebspannung $\underline{u}_{dr}$ gemäß der vorstehenden Gleichung neu zu bestimmen. Wenn dies - wie für ein regelungstechnisches Abtastsystem üblich - fortwährend gemacht wird, kann das Coriolis-Massedurchflussmessgerät 1 auch dann im Resonanzbetrieb gehalten werden, wenn der Resonanzpunkt - aus welchem Grund auch immer - während des Betriebs wegwandert.

Der aufgezeigte Zusammenhang setzt voraus, dass der Gegeninduktionsfaktor $k_B$ bekannt ist. Der Gegeninduktionsfaktor lässt sich gemäß einer vorteilhaften Weiterbildung des erfindungsgemäßen Verfahrens vergleichsweise einfach ermitteln. Dazu ist vorgesehen, dass die Impedanz $Z_s$ der Antriebspule 8 außerhalb des Resonanzbetriebs des Coriolis-Massedurchflussmessgeräts 1 ermittelt wird, indem der Quotient aus der Antriebspannung $\underline{u}_{dr}$ und dem sich einstellenden Antriebstrom $\underline{i}_{dr}$ berechnet wird und der Gegeninduktionsfaktor $k_B$ ermittelt wird unter - der in diesem Fall zulässigen - Vernachlässigung der Gegeninduktionsspannung $\underline{u}_B$ an der Antriebspule 8. Die Ermittlung geschieht mittels der Maschengleichung zur Netzwerkmasche bestehend aus dem Ausgang der elektrischen Stelleinrichtung 3 und dem elektromagnetischen Antrieb 4 mit der Antriebspule 8. Wenn das Messrohr 5 außerhalb der Resonanz zur Schwingung angeregt wird, kann die Gegeninduktionsspannung $\underline{u}_B$ vernachlässigt werden, sodass sich aus der Maschengleichung die Impedanz sehr einfach berechnen lässt:

$$\underline{Z}_S = \frac{\underline{u}_{dr}}{\underline{i}_{dr}}. \qquad (10)$$

Wenn jedoch die Impedanz $Z_s$ bekannt ist, lässt sich der Gegeninduktionsfaktor $k_B$ leicht berechnen durch:

$$k_B = \frac{\underline{u}_{dr}-\underline{Z}_S\cdot\underline{i}_{dr}}{\underline{u}_s}. \qquad (11)$$

Das aufgezeigte Verfahren ist bei dem Coriolis-Massedurchflussmessgerät 1 in dem Regler 2 implementiert, so dass das dort dargestellte Coriolis-Massedurchflussmessgerät 1 die aufgezeigten Varianten des Verfahrens zum Betreiben eines Coriolis-Massedurchflussmessgeräts im Betrieb durchführt.

## Patentansprüche

1. Verfahren zum Betreiben eines Coriolis-Massedurchflussmessgeräts (1) mit wenigstens einem Regler (2), wenigstens einer elektrische Stelleinrichtung (3), wenigstens einem elektromagnetischen Antrieb (4) mit einer Antriebspule (8) als Schwingungserzeuger, wenigstens einem Messrohr (5), und wenigstens einem Schwingungsaufnehmer (6), wobei der Regler (2) ein Reglerausgangssignal ($\underline{u}_c$) zur Ansteuerung der elektrischen Stelleinrichtung (3) erzeugt, die elektrische Stelleinrichtung (3) ein elektrisches Anregungssignal ($\underline{u}_{dr}$) zur Anregung des elektromagnetischen Antriebs (4) bereitstellt, der elektromagnetische Antrieb (4) das Messrohr (5) zur Schwingung in wenigstens einer Eigenform anregt und wobei die angeregte Schwingung des Messrohrs (5) von dem Schwingungsaufnehmer (6) erfasst und als wenigstens ein Ausgangssignal ($\underline{u}_s$) ausgegeben wird, wobei die elektrische Stelleinrichtung (3) die Antriebspule (8) des elektromagnetischen Antriebs (4) so mit einer Antriebspannung ($\underline{u}_{dr}$) und einem Antriebstrom ($\underline{i}_{dr}$) beaufschlagt, dass die Schwingung des Messrohrs (5) weitestgehend in Resonanz erfolgt,
**dadurch gekennzeichnet,**
**dass** zur Erzielung des Resonanzbetriebs das Ausgangssignal ($\underline{u}_s$) des Schwingungsaufnehmers (6) ermittelt wird, die Antriebspannung ($\underline{u}_{dr}$) an der Antriebspule (8) ermittelt wird, die Phasenlage ($\varphi_{idr}$) des Antriebstroms ($\underline{i}_{dr}$) gegenüber der Phasenlage ($\varphi_s$) des Ausgangssignal ($\underline{u}_s$) des Schwingungsaufnehmers (6) ermittelt wird und aus den ermittelten Größen eine neue Sollphasenlage ($\varphi_{dr,soll}$) für die Antriebspannung ($\underline{u}_{dr}$) ermittelt und dem Regler (2) zugeleitet wird so, dass der Regler (2) über die elektrische Stelleinrichtung (3) eine Antriebspannung ($\underline{u}_{dr}$) mit der ermittelten neuen Sollphasenlage ($\varphi_{dr,soll}$) erzeugt, wobei eine Sollvorgabe ($\underline{u}_{dr,soll}$) für die Antriebspannung ($\underline{u}_{dr}$)

und damit auch eine Sollphasenlage ($\varphi_{dr,soll}$) der Antriebspannung ($\underline{u}_{dr}$) unter Definition einer Nullphasenlage ($\varphi_s$ = 0) des Ausgangssignals ($\underline{u}_s$) ermittelt wird und wobei die Sollvorgabe ($\underline{u}_{dr,soll}$) für die Antriebspannung ($\underline{u}_{dr}$) über den gleichungsmäßigen Zusammenhang

$$\underline{u}_{dr,soll} = e^{-j\varphi_{idr}}\left(\underline{u}_{dr} - k_B \cdot u_s\right) + k_B \cdot u_s,$$

ermittelt wird, wobei der Gegeninduktionsfaktor $k_B$ eine reelle Zahl ist.

2. Verfahren zum Betreiben eines Coriolis-Massedurchflussmessgeräts (1) nach Anspruch 1, **dadurch gekennzeichnet, dass** die Impedanz $\underline{Z}_s$ der Antriebspule (8) außerhalb des Resonanzbetriebs ermittelt wird, indem der Quotient aus der Antriebspannung ($\underline{u}_{dr}$) und dem sich einstellenden Antriebstrom ($\underline{i}_{dr}$) berechnet wird, und der Gegeninduktionsfaktor $k_B$ ermittelt wird unter Vernachlässigung der Gegeninduktionsspannung ($\underline{u}_B$) an der Antriebspule (8) aus der Maschengleichung zur Netzwerkmasche aus dem Ausgang der elektrischen Stelleinrichtung (3) und dem elektromagnetischen Antrieb (4) mit der Antriebspule (8).

3. Verfahren zum Betreiben eines Coriolis-Massedurchflussmessgeräts (1) nach Anspruch 2, **dadurch gekennzeichnet, dass** zur Ermittlung des Gegeninduktionsfaktors $k_B$ folgender Zusammenhang mit der Impedanz $\underline{Z}_s$ der Antriebspule, dem Antriebstrom ($\underline{i}_{dr}$) und dem Ausgangssignal ($\underline{u}_s$) des Schwingungsaufnehmers herangezogen wird:

$$k_B = \frac{\underline{u}_{dr} - \underline{Z}_S \cdot \underline{i}_{dr}}{\underline{u}_S}.$$

4. Verfahren zum Betreiben eines Coriolis-Massedurchflussmessgeräts (1) nach einem der Ansprüche 1 bis 3, **dadurch gekennzeichnet, dass** der Regelbetrieb in Resonanz zeitweise unterbrochen wird, dem Regler (2) eine andere Phasenvorgabe als Sollwert für die Phasenlage ($\varphi_{idr}$) des Antriebstroms ($\underline{i}_{dr}$) gegenüber der Phasenlage ($\varphi_s$) des Ausgangssignal ($\underline{u}_s$) des Schwingungsaufnehmers (6) vorgegeben wird, insbesondere eine Phasenlage, die einer Phasendifferenz von +- 45° entspricht.

5. Coriolis-Massedurchflussmessgeräts (1) mit wenigstens einem Regler (2), wenigstens einer elektrischen Stelleinrichtung (3), wenigstens einem elektromagnetischen Antrieb (4) mit einer Antriebspule (8) als Schwingungserzeuger, wenigstens einem Messrohr (5), und wenigstens einem Schwingungsaufnehmer (6), wobei der Regler (2) ein Reglerausgangssignal ($\underline{u}_c$) zur Ansteuerung der elektrischen Stelleinrichtung (3) erzeugt, die elektrische Stelleinrichtung (3) ein elektrisches Anregungssignal ($\underline{u}_{dr}$) zur Anregung des elektromagnetischen Antriebs (4) bereitstellt, der elektromagnetische Antrieb (4) das Messrohr (5) zur Schwingung in wenigstens einer Eigenform anregt und wobei die angeregte Schwingung des Messrohrs (5) von dem Schwingungsaufnehmer (6) erfasst und als wenigstens ein Ausgangssignal ($\underline{u}_s$) ausgegeben wird, wobei die elektrische Stelleinrichtung (3) die Antriebspule (8) des elektromagnetischen Antriebs (4) so mit einer Antriebspannung ($\underline{u}_{dr}$) und einem Antriebstrom ($\underline{i}_{dr}$) beaufschlagt, dass die Schwingung des Messrohrs (5) weitestgehend in Resonanz erfolgt,
**dadurch gekennzeichnet,**
**dass** zur Erzielung des Resonanzbetriebs das Ausgangssignal ($\underline{u}_s$) des Schwingungsaufnehmers (6) ermittelt wird, die Antriebspannung ($\underline{u}_{dr}$) an der Antriebspule (8) ermittelt wird, die Phasenlage ($\varphi_{idr}$) des Antriebstroms ($\underline{i}_{dr}$) gegenüber der Phasenlage ($\varphi_s$) des Ausgangssignal ($\underline{u}_s$) des Schwingungsaufnehmers (6) ermittelt wird und aus den ermittelten Größen eine neue Sollphasenlage ($\varphi_{dr,soll}$) für die Antriebspannung ($\underline{u}_{dr}$) ermittelt und dem Regler (2) zugeleitet wird so, dass der Regler (2) über die elektrische Stelleinrichtung (3) eine Antriebspannung ($\underline{u}_{dr}$) mit der ermittelten neuen Sollphasenlage ($\varphi_{dr,soll}$) erzeugt wobei eine Sollvorgabe ($\underline{u}_{dr,soll}$) für die Antriebspannung ($\underline{u}_{dr}$) und damit auch eine Sollphasenlage ($\varphi_{dr,soll}$) der Antriebspannung ($\underline{u}_{dr}$) unter Definition einer Nullphasenlage ($\varphi_s$ = 0) des Ausgangssignals ($\underline{u}_s$) ermittelt wird und wobei die Sollvorgabe ($\underline{u}_{dr,soll}$) für die Antriebspannung ($\underline{u}_{dr}$) über den gleichungsmäßigen Zusammenhang

$$\underline{u}_{dr,soll} = e^{-j\varphi_{idr}}\left(\underline{u}_{dr} - k_B \cdot u_s\right) + k_B \cdot u_s,$$

ermittelt wird, wobei der Gegeninduktionsfaktor $k_B$ eine reelle Zahl ist.

6. Coriolis-Massedurchflussmessgeräts (1) nach Anspruch 5, **dadurch gekennzeichnet, dass** das Gerät so ausgestaltet ist, dass es im Betrieb eines der Verfahren gemäß einem der Ansprüche 2 bis 4 durchführt.

**Claims**

1.  Method for operating a Coriolis mass flowmeter (1) having at least one controller (2), at least one electric actuating device (3), at least one electromagnetic driving mechanism (4) with a drive coil (8) as oscillation generator, at least one measuring tube (5) and at least one oscillation sensor (6), wherein the controller (2) generates a controller output signal ($\underline{u}_c$) for controlling the electric actuating device (3), the electric actuating device (3) provides an electric excitation signal ($\underline{u}_{dr}$) for exciting the the electromagnetic drive mechanism (4), the electromagnetic drive mechanism (4) excites the measuring tube (5) to oscillation in at least one eigenform and wherein the excited oscillation of the measuring tube (5) is detected by the oscillation sensor (6) and emitted as at least one output signal ($\underline{u}_s$), wherein the electric actuating device (3) impinges the drive coil (8) of the electromagnetic driving mechanism with a drive voltage ($\underline{u}_{dr}$) and a drive current ($\underline{i}_{dr}$) so that the oscillation of the measuring tube (5) occurs largely in resonance, **characterized in that**, for achieving resonance operation, the output signal ($\underline{u}_s$) of the oscillation sensor (6) is determined, the drive voltage ($\underline{u}_{dr}$) at the drive coil (8) is determined, the phasing ($\varphi_{idr}$) of the drive current ($\underline{i}_{dr}$) in relation to the phasing ($\varphi_s$) of the output signal ($\underline{u}_s$) of the oscillation sensor (6) is determined and a new target phasing ($\varphi_{dr,soll}$) for the drive voltage ($\underline{u}_{dr}$) is derived from the determined quantities and supplied to the controller (2) so that the controller (2) generates a drive voltage ($\underline{u}_{dr}$) with the determined new target phasing ($\varphi_{dr,soll}$) via the electric actuating device (3), wherein a target specification ($\underline{u}_{dr,soll}$) for the drive voltage ($\underline{u}_{dr}$), and thus also a target phasing ($\varphi_{dr,soll}$) of the drive voltage ($\underline{u}_{dr}$), is determined by defining a zero phasing ($\varphi_s = 0$) of the output signal ($\underline{u}_s$), wherein the target specification ($\underline{u}_{dr,soll}$) for the drive voltage ($\underline{u}_{dr}$) is determined using the equation

    $$\underline{u}_{dr,soll} = e^{-j\,\varphi_{idr}}\left(\underline{u}_{dr} - k_B \cdot u_s\right) + k_B \cdot u_s$$

    wherein the mutual induction factor $k_B$ is a real number.

2.  Method for operating a Coriolis mass flowmeter (1) according to claim 1, **characterized in that** the impedance $\underline{Z}_S$ of the drive coil (8) is determined outside of resonance operation, **in that** the quotient of the drive voltage ($\underline{u}_{dr}$) and the adjusting drive current ($\underline{i}_{dr}$) is calculated, and the mutual induction factor $k_B$ is determined without taking the mutual induction voltage ($\underline{u}_B$) at the drive coil (8) into account using the mesh equation for the network mesh of the output of the electric actuating device (3) and the electromagnetic driving mechanism (4) with the drive coil (8).

3.  Method for operating a Coriolis mass flowmeter (1) according to claim 2, **characterized in that**, in order to determine the mutual induction factor $k_B$, the following relation is used with the impedance $\underline{Z}_S$ of the drive coil, the drive current ($\underline{i}_{dr}$) and the output signal ($\underline{u}_s$) of the oscillation sensor

    $$k_B = \frac{\underline{u}_{dr} - \underline{Z}_S \cdot \underline{i}_{dr}}{\underline{u}_S}$$

4.  Method for operating a Coriolis mass flowmeter (1) according to any one of claims 1 to 3, **characterized in that** the control mode in resonance is temporarily interrupted, the controller (2) is provided another phasing specification as target value for the phasing ($\varphi_{idr}$) of the drive current ($\underline{i}_{dr}$) compared to the phasing ($\varphi_s$) of the output signal ($\underline{u}_s$) of the oscillation sensor (6), in particular a phasing that corresponds to a phase difference of +- 45°.

5.  Coriolis mass flowmeter (1) having at least one controller (2), at least one electric actuating device (3), at least one electromagnetic driving mechanism (4) with a drive coil (8) as oscillation generator, at least one measuring tube (5) and at least one oscillation sensor (6), wherein the controller (2) generates a controller output signal ($\underline{u}_c$) for controlling the electric actuating device (3), the electric actuating device (3) provides an electric excitation signal ($\underline{u}_{dr}$) for exciting the the electromagnetic drive mechanism (4), the electromagnetic drive mechanism (4) excites the measuring tube (5) to oscillation in at least one eigenform and wherein the excited oscillation of the measuring tube (5) is detected by the oscillation sensor (6) and emitted as at least one output signal ($\underline{u}_s$), wherein the electric actuating device (3) impinges the drive coil (8) of the electromagnetic driving mechanism with a drive voltage ($\underline{u}_{dr}$) and a drive current ($\underline{i}_{dr}$) so that the oscillation of the measuring tube (5) occurs largely in resonance, **characterized in that**, for achieving resonance operation, the output signal ($\underline{u}_s$) of the oscillation sensor (6) is determined, the drive voltage ($\underline{u}_{dr}$) at the drive coil (8) is determined, the phasing ($\varphi_{idr}$) of the drive current ($\underline{i}_{dr}$) in relation to the phasing ($\varphi_s$) of the output signal ($\underline{u}_s$) of the oscillation sensor (6) is determined and a new target phasing ($\varphi_{dr,soll}$) for the

drive voltage ($\underline{u}_{dr}$) is derived from the determined quantities and supplied to the controller (2) so that the controller (2) generates a drive voltage ($\underline{u}_{dr}$) with the determined new target phasing ($\varphi_{dr,soll}$) via the electric actuating device (3), wherein a target specification ($\underline{u}_{dr,soll}$) for the drive voltage ($\underline{u}_{dr}$), and thus also a target phasing ($\varphi_{dr,soll}$) of the drive voltage ($\underline{u}_{dr}$), is determined by defining a zero phasing ($\varphi_s = 0$) of the output signal ($\underline{u}_s$), wherein the target specification ($\underline{u}_{dr,soll}$) for the drive voltage ($\underline{u}_{dr}$) is determined using the equation

$$\underline{u}_{dr,soll} = e^{-j\,\varphi_{idr}}\left(\underline{u}_{dr} - k_B \cdot u_s\right) + k_B \cdot u_s$$

wherein the mutual induction factor $k_B$ is a real number.

6. Coriolis mass flowmeter (1) according to claim 5, **characterized in that** the device is designed so that it carries out one of the methods according to any one of claims 2 to 4 during operation.

**Revendications**

1. Procédé de fonctionnement d'un débitmètre massique de type Coriolis (1) comprenant au moins un régulateur (2), au moins un dispositif de réglage électrique (3), au moins un entraînement électromagnétique (4) doté d'une bobine d'entraînement (8) en tant que générateur d'oscillations, au moins un tube de mesure (5), et au moins un capteur d'oscillations (6), dans lequel le régulateur (2) génère un signal de sortie de régulateur ($\underline{u}_c$) destiné à commander le dispositif de réglage électrique (3), le dispositif de réglage électrique (3) fournit un signal d'excitation électrique ($\underline{u}_{dr}$) destiné à exciter l'entraînement électromagnétique (4), l'entraînement électromagnétique (4) excite le tube de mesure (5) pour qu'il oscille dans au moins un mode propre et dans lequel l'oscillation excitée du tube de mesure (5) est détectée par le capteur d'oscillations (6) et est délivrée sous la forme d'au moins un signal de sortie ($\underline{u}_s$), dans lequel le dispositif de réglage électrique (3) applique une tension d'entraînement ($\underline{u}_{dr}$) et un courant d'entraînement ($\underline{i}_{dr}$) à la bobine d'entraînement (8) de l'entraînement électromagnétique (4) de telle sorte que l'oscillation du tube de mesure (5) s'effectue principalement en résonance,
**caractérisé en ce que**
le signal de sortie ($\underline{u}_s$) du capteur d'oscillations (6) est déterminé de manière à obtenir un fonctionnement en résonance, la tension d'entraînement ($\underline{u}_{dr}$) au niveau de la bobine d'entraînement (8) est déterminée, la position de phase ($\varphi_{idr}$) du courant d'entraînement ($\underline{i}_{dr}$) par rapport à la position de phase ($\varphi_s$) du signal de sortie ($\underline{u}_s$) du capteur d'oscillations (6) est déterminée et une nouvelle position de phase de consigne ($\varphi_{dr,soll}$) de la tension d'entraînement ($\underline{u}_{dr}$) est déterminée à partir des grandeurs déterminées et est envoyée au régulateur (2) de telle sorte que le régulateur (2) génère par l'intermédiaire du dispositif de réglage électrique (3) une tension d'entraînement ($\underline{u}_{dr}$) présentant la nouvelle position de phase de consigne ($\varphi_{dr,soll}$) déterminée, dans lequel un point de consigne ($\underline{u}_{dr,soll}$) de la tension d'entraînement ($\underline{u}_{dr}$) et par conséquent, une position de phase de consigne ($\varphi_{dr,soll}$) de la tension d'entraînement ($\underline{u}_{dr}$) est également déterminée en définissant une position de phase nulle ($\varphi_s = 0$) du signal de sortie ($\underline{u}_s$) et dans lequel le point de consigne ($\underline{u}_{dr,soll}$) de la tension d'entraînement ($\underline{u}_{dr}$) est déterminée par l'équation suivante :

$$\underline{u}_{dr,soll} = e^{-j\,\varphi_{idr}}\left(\underline{u}_{dr} - k_B \cdot u_s\right) + k_B \cdot u_s ,$$

où le coefficient d'induction mutuelle $k_B$ est un nombre réel.

2. Procédé de fonctionnement d'un débitmètre massique de type Coriolis (1) selon la revendication 1, **caractérisé en ce que** l'impédance $\underline{Z}_S$ de la bobine d'entraînement (8) est déterminée en dehors du mode de résonance en calculant le quotient entre la tension d'entraînement ($\underline{u}_{dr}$) et le courant d'entraînement ($\underline{i}_{dr}$) établi, et le coefficient d'induction mutuelle $k_B$ est déterminé en négligeant la tension d'induction mutuelle ($\underline{u}_B$) au niveau de la bobine d'entraînement (8) à partir de l'équation de maillage pour le maillage du réseau constitué par la sortie du dispositif de réglage électrique (3) et l'entraînement électromagnétique (4) comportant la bobine d'entraînement (8).

3. Procédé de fonctionnement d'un débitmètre massique de type Coriolis (1) selon la revendication 2, **caractérisé en ce que**, pour déterminer le coefficient d'induction mutuelle $k_B$, on utilise la relation suivante avec l'impédance $\underline{Z}_S$ de la bobine d'entraînement, le courant d'entraînement ($\underline{i}_{dr}$) et le signal de sortie ($\underline{u}_s$) du capteur d'oscillations :

$$k_B = \frac{\underline{u}_{dr} - \underline{Z}_S \cdot \underline{i}_{dr}}{\underline{u}_S}.$$

4. Procédé de fonctionnement d'un débitmètre massique de type Coriolis (1) selon l'une des revendications 1 à 3, **caractérisé en ce que** le mode de régulation en résonance est temporairement interrompu, le régulateur (2) reçoit un autre point de phase en tant que valeur de consigne de la position de phase ($\varphi_{idr}$) du courant d'entraînement ($\underline{i}_{dr}$) par rapport à la position de phase ($\varphi_s$) du signal de sortie ($\underline{u}_s$) du capteur d'oscillations (6), en particulier une position de phase correspondant à une différence de phase de +- 45°.

5. Débitmètre massique de type Coriolis (1) comportant au moins un régulateur (2), au moins un dispositif de réglage électrique (3), au moins un entraînement électromagnétique (4) doté d'une bobine d'entraînement (8) en tant que générateur d'oscillations, au moins un tube de mesure (5), et au moins un capteur d'oscillations (6), dans lequel le régulateur (2) génère un signal de sortie de régulateur ($\underline{u}_c$) destiné à commander le dispositif de réglage électrique (3), le dispositif de réglage électrique (3) fournit un signal d'excitation électrique ($\underline{u}_{dr}$) destiné à exciter l'entraînement électromagnétique (4), l'entraînement électromagnétique (4) excite le tube de mesure (5) pour qu'il oscille dans au moins un mode propre et dans lequel l'oscillation excitée du tube de mesure (5) est détectée par le capteur d'oscillations (6) et est délivrée sous la forme d'au moins un signal de sortie ($\underline{u}_s$), dans lequel le dispositif de réglage électrique (3) applique une tension d'entraînement ($\underline{u}_{dr}$) et un courant d'entraînement ($\underline{i}_{dr}$) à la bobine d'entraînement (8) de l'entraînement électromagnétique (4) de telle sorte que l'oscillation du tube de mesure (5) s'effectue principalement en résonance,

**caractérisé en ce que**

le signal de sortie ($\underline{u}_s$) du capteur d'oscillations (6) est déterminé de manière à obtenir un fonctionnement en résonance, la tension d'entraînement ($\underline{u}_{dr}$) au niveau de la bobine d'entraînement (8) est déterminée, la position de phase ($\varphi_{idr}$) du courant d'entraînement ($\underline{i}_{dr}$) par rapport à la position de phase ($\varphi_s$) du signal de sortie ($\underline{u}_s$) du capteur d'oscillations (6) est déterminée et une nouvelle position de phase de consigne ($\varphi_{dr,soll}$) de la tension d'entraînement ($\underline{u}_{dr}$) est déterminée à partir des grandeurs déterminées et est envoyée au régulateur (2) de telle sorte que le régulateur (2) génère par l'intermédiaire du dispositif de réglage électrique (3) une tension d'entraînement ($\underline{u}_{dr}$) présentant la nouvelle position de phase de consigne ($\varphi_{dr,soll}$) déterminée, dans lequel un point de consigne ($\underline{u}_{dr,soll}$) de la tension d'entraînement ($\underline{u}_{dr}$) et par conséquent, une position de phase de consigne ($\varphi_{dr,soll}$) de la tension d'entraînement ($\underline{u}_{dr}$) est également déterminé en définissant une position de phase nulle ($\varphi_s = 0$) du signal de sortie ($\underline{u}_s$) et dans lequel le point de consigne ($\underline{u}_{dr,soll}$) de la tension d'entraînement ($\underline{u}_{dr}$) est déterminé par l'équation suivante :

$$\underline{u}_{dr,soll} = e^{-j\varphi_{idr}}\left(\underline{u}_{dr} - k_B \cdot u_s\right) + k_B \cdot u_s,$$

où le coefficient d'induction mutuelle $k_B$ est un nombre réel.

6. Débitmètre massique de type Coriolis (1) selon la revendication 5, **caractérisé en ce que** ledit débitmètre est conçu pour mettre en œuvre, lors de son fonctionnement, l'un des procédés selon l'une des revendications 2 à 4.

Fig. 1

Fig. 2

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102012011932 A1
- DE 102006031198 A1
- DE 102008059920 A1